(19) **Europäisches Patentamt**

**European Patent Office**

**Office européen des brevets**

(11) **EP 0 683 419 B1**

(12) **FASCICULE DE BREVET EUROPEEN**

(45) Date de publication et mention
de la délivrance du brevet:
**02.01.2003 Bulletin 2003/01**

(51) Int Cl.[7]: **G02F 1/163**

(21) Numéro de dépôt: **95401122.7**

(22) Date de dépôt: **15.05.1995**

(54) **Procédé d'alimentation d'un système électrochrome**

Verfahren zur Stromversorgung eines elektrochromen Systems

Method of supplying power to an electrochromic system

(84) Etats contractants désignés:
**BE DE FR GB IT SE**

(30) Priorité: **16.05.1994 FR 9405948**

(43) Date de publication de la demande:
**22.11.1995 Bulletin 1995/47**

(73) Titulaire: **SAINT-GOBAIN GLASS FRANCE**
**92400 Courbevoie (FR)**

(72) Inventeurs:
• **Lefrou, Christine**
**F-94200 Ivry sur Seine (FR)**

• **Ast, Marc**
**F-92260 Fontenay aux Roses (FR)**

(74) Mandataire: **Renous Chan, Véronique et al**
**Saint-Gobain Recherche,**
**39, Quai Lucien Lefranc**
**93300 Aubervilliers (FR)**

(56) Documents cités:
**EP-A- 0 006 797      EP-A- 0 078 463**
**EP-A- 0 408 427      GB-A- 2 074 747**
**US-A- 4 201 984**

**Description**

La présente invention est relative au procédé d'alimentation d'un système électrochrome du type vitrage électrochrome. Les vitrages électrochromes sont des vitrages à transmission lumineuse et/ou énergétique électrocommandées, autrement dit des vitrages dont on peut modifier la transmission de certaines longueurs d'onde du rayonnement électromagnétique notamment dans l'infrarouge et/ou dans le visible sous l'effet d'un courant électrique.

De tels vitrages sont particulièrement intéressants pour équiper façades de bâtiments ou véhicules afin de contrôler l'apport solaire à l'intérieur des pièces ou habitacles. On peut aussi s'en servir pour constituer des cloisons internes dans des bâtiments ou même les associer à des miroirs du type rétroviseurs pour éviter les phénomènes d'éblouissement.

Les systèmes électrochromes entrant dans le cadre de la présente invention sont tous les systèmes basés sur une réaction électrochimique impliquant le passage d'un courant électrique qui doit être fourni au système au moins pour un des sens de la réaction ou le plus souvent dans les deux sens de commutation.

Les plus connus de ces systèmes sont des systèmes basés sur l'insertion réversible de cations dans des oxydes métalliques. Par la suite, et pour plus de clarté, il sera fait essentiellement référence à de tels systèmes pour évoquer les difficultés qui se présentent mais l'invention ne doit pas pour autant être considérée comme limitée à ce type de systèmes électrochromes.

Leur principe de fonctionnement est le suivant. Ils comportent une couche d'un matériau à propriété électrochrome, qui est capable d'insérer de manière réversible des cations, notamment des protons $H^+$ ou des cations d'un métal alcalin comme le lithium $Li^+$ et de ce fait passer d'un degré d'oxydation à un autre, chacun des degrés d'oxydation correspondant à un état de coloration différent.

Ainsi, le trioxyde de tungstène, pratiquement incolore dans son état oxydé (a), est d'une coloration bleu-nuit soutenue dans son état réduit (b) obtenu en insérant des cations $M^+$ selon la réaction suivante :

$$WO_3 \text{ (a)} + x\, M^+ + x\, e^- \leftrightarrow M_x WO_3 \text{ (b) ou } M^+ = Li^+, H^+$$

La réaction d'insertion suppose une source de cations et une source d'électrons. D'autre part, dans un système complet, l'obtention d'une bonne réversibilité, du moins pour un nombre de cycles d'insertion/désinsertion grand, est subordonnée à la présence d'une contre-électrode, capable elle aussi d'insérer et de désinsérer des cations de façon réversible et complémentaire par rapport à l'électrode principale.

C'est la raison pour laquelle les vitrages électrochromes sont usuellement constitués par deux substrats, usuellement en verre, entre lesquels on dispose deux couches électroconductrices transparentes munies d'amenées de courant, couches séparées successivement par une électrode constituée d'un matériau électrochrome cathodique tel que $WO_3$, un électrolyte apte à assurer un transfert de cations et enfin une contre-électrode insérant ou désinsérant les cations symétriquement par rapport à l'électrode. De préférence, la contre-électrode est également en matériau électrochrome, un matériau électrochrome anodique comme l'oxyde d'iridium ou l'oxyde de nickel étant associé à un matériau électrochrome cathodique comme le $WO_3$. Un tel matériau électrochrome anodique est incolore à l'état réduit (ou état inséré) et coloré à l'état oxydé (ou désinséré). De ce fait, il permet de plus de renforcer le contraste de coloration du vitrage.

Un fonctionnement idéal d'un vitrage électrochrome consisterait à permettre à l'utilisateur, par commande électrique, de faire passer le vitrage à volonté d'un degré de coloration à un autre dans une gamme de transmission lumineuse donnée, et ceci en un temps de commutation, c'est-à-dire de modification de coloration, qui soit rapide quelles que soient les conditions d'utilisation du vitrage et quelle que soit sa taille. Or c'est un objectif qui n'est pas simple à atteindre, dans la mesure où interviennent beaucoup de paramètres et de contraintes liés à la structure et aux matériaux constitutifs mêmes du vitrage, d'où tous les efforts actuellement menés pour optimiser les alimentations électriques.

Ainsi, pour faire fonctionner le système, il faut imposer, entre tout couple de deux points en vis-à-vis de part et d'autre de l'électrolyte, une différence de potentiel au moins égale à la différence des potentiels thermodynamiques de la réaction d'insertion/désinsertion souhaitée. En pratique, compte tenu notamment des problèmes d'interface et de la résistance de l'électrolyte, la valeur minimum à imposer est toujours supérieure à la différence des potentiels thermodynamiques. Plus la différence de potentiel appliquée est grande et plus la coloration ou la décoloration sera rapide. Néanmoins, la tension de fonctionnement ne doit pas être trop importante car il importe de ne pas dépasser les tensions permettant des réactions parasites pouvant par exemple entraîner l'apparition de bulles. Pour chaque changement d'état de coloration du système électrochrome, il est ainsi nécessaire de ne pas dépasser une certaine différence de potentiel appelée par la suite potentiel limite du système.

Par ailleurs, les couches électroconductrices du système sont destinées au transfert des charges et la tension ne peut être appliquée qu'entre deux bornes diamétralement opposées du système électrochrome. Mais il va de soi que les couches électroconductrices présentent nécessairement une certaine résistance. Ainsi, dans le cas d'une couche transparente à base d'oxyde d'indium dopé à l'étain (ITO), une résistance carrée d'environ 5 Ohms correspond aujourd'hui à un optimum de conductivité dans des conditions industrielles de production, d'où des chutes ohmiques du système d'autant plus importantes que ses dimensions sont grandes. De ce fait, la différence de potentiel effectivement imposée entre deux points en vis-à-vis est d'autant plus faible que ces points sont éloignés des bornes, avec alors pur ceux-ci un retard très important à la coloration, le maximum de coloration n'étant obtenu qu'après une durée de plusieurs minutes. Quand la taille du système devient grande (par exemple de l'ordre du mètre/carré), la commutation complète du système peut même s'avérer impossible à réaliser en un temps raisonnable.

Une amélioration a été apportée dans la demande de brevet EP-A-408 427, qui, à l'aide d'un montage dit à 3 électrodes du type potentiostat, permet d'augmenter très sensiblement les vitesses de commutation, en modulant la différence de potentiel appliquée, de telle sorte que la différence de potentiel entre un point donné de la couche de matériau électrochrome, choisi à proximité immédiate de la bande d'amenée de courant et son point en vis-à-vis de la contre-électrode, reste au cours de cette période de commutation, égale à une tension de consigne au-dessus de laquelle des réactions parasites sont susceptibles de se produire. Ce procédé d'alimentation conduit à appliquer, aux bornes du système et, au début du cycle de commutation une tension bien plus grande, tenant compte de la chute ohmique, ce qui permet de réduire les temps de commutation.

Il doit être noté que la tension de consigne dépend de la température d'utilisation du vitrage. Ainsi, à haute température, la conductivité de l'électrolyte est relativement élevée, les chutes ohmiques sont de ce fait assez faibles, de sorte que la tension de consigne doit uniquement tenir compte des réactions électrochimiques parasites. Pour des températures plus basses, de l'ordre de l'ambiante, il faut augmenter légèrement la valeur de la tension de consigne en fonction de l'augmentation des chutes ohmiques. Enfin, pour des températures encore plus basses, typiquement 0°C ou moins, ce type d'alimentation convient mal car la tension de chute ohmique diminue fortement au cours d'une coloration : une valeur de consigne élevée - choisie pour des temps de commutations raisonnables - va s'avérer dégradante en fin de coloration. Ceci conduit à des dispositifs d'alimentation relativement complexes.

Par ailleurs, les temps de commutation restent encore liés à la taille des vitrages, ce qui peut poser des problèmes sur le plan esthétique, si l'on envisage d'assembler des vitrages électrochromes de tailles différentes en une cloison ou une façade. En dernier lieu, ce système d'alimentation a tendance à accentuer des phénomènes « de bords » : en phase coloration ou de décoloration, la modification de coloration est plus rapide à la périphérie du vitrage que dans sa partie centrale.

Il est connu du brevet US-4 201 984, un système d'affichage à base d'un matériau électrochrome décomposé en une pluralité de segments, et qui utilise une alimentation par une source d'intensité de courant constante, dont la valeur varie suivant le nombre de segments dont on veut modifier la coloration.

Le but de l'invention est de remédier à ces inconvénients en proposant un nouveau type d'alimentation électrique des vitrages électrochromes qui permette une plus grande liberté dans le choix des temps de commutation, notamment en parvenant à les affranchir dans une large mesure des variations de température d'utilisation et des variations dans les tailles des vitrages.

L'invention a ainsi pour objet principal un procédé d'alimentation électrique d'un système électrochrome comportant un matériau dont l'état de coloration et/ou de transmission dans certaines longueurs d'onde du rayonnement électromagnétique varie de façon réversible par la mise en jeu d'une réaction électrochimique impliquant le passage d'un courant électrique, ledit courant électrique étant généré par un générateur d'intensité apte à délivrer un courant dont l'intensité obéit à une valeur de consigne déterminée en fonction du nombre de charge à transférer pour commuter de l'état initial à l'état voulu et en fonction de la durée choisie pour la commutation, le procédé étant caractérisé par le fait qu'on régule l'intensité générée, au moins quand le changement de coloration est une décoloration, en la maintenant inférieure, en valeur absolue, à l'intensité correspondant à une tension et/ou une variation de tension susceptible de conduire à une dégradation du système.

L'invention s'applique tout particulièrement à un système électrochrome comportant notamment deux substrats transparents par exemple du type feuille de verre, revêtus de deux couches électroconductrices transparentes séparées successivement par une électrode formée par une couche d'un matériau électrochrome, un électrolyte et une contre-électrode, les couches électroconductrices étant reliées à un circuit de commande électrique comprenant un générateur d'intensité apte à délivrer des intensités déterminées en fonction du nombre de charges à transférer pour obtenir le changement de coloration voulue et en fonction du temps de changement de coloration voulue.

En substituant ainsi aux générateurs de tension usuels un générateur d'intensité, on résout une grande partie des problèmes dus aux changements de comportement des matériaux du vitrage en fonction de la taille ou de la température, notamment en ce qui concerne les déperditions ohmiques et leurs variations dues à la variation de conductivité ionique de l'électrolyte avec la température. En effet, la coloration - ou la décoloration du système - est obtenue par le transfert d'un nombre donné d'ions, avec le transfert d'un nombre équivalent d'électrons transférés d'une électrode à l'autre correspondant à un courant électrique. Le temps de transfert, qui correspond donc au temps de changement de coloration (appelé plus simplement temps de commutation) est lié au temps d'application de ce courant électrique. Or on peut déterminer le nombre Q de charges électriques adéquat, par simple calcul prenant en compte la taille du vitrage, de la nature exacte des couches de matériaux électrochromes utilisées et le contraste que l'on cherche à obtenir (le contraste est défini comme le rapport de la transmission lumineuse à l'état décoloré sur la transmission lumineuse à l'état coloré). Quel que soit l'âge ou les fluctuations de production du vitrage (notamment les variations d'épaisseurs des couches électrochromes) ou la température, la loi de variation de la quantité de charges par unité de surface est inchangée. Après s'être fixé un temps de commutation (choisi librement en restant cependant dans les bornes du possible, c'est-à-dire en veillant à ce qu'il corresponde dans toutes les configurations possibles d'utilisation du système à des niveaux de tension admissibles), on peut calculer l'intensité I qu'il faut appliquer par la simple formule I = Q/t. C'est donc uniquement l'intensité que l'on calcule, contrôle et impose, et non plus la tension, qui, elle, est susceptible de fluctuation pendant les commutations selon la taille, la température du vitrage, l'évolution du vitrage au cours du temps ou encore d'un vitrage à l'autre selon les fluctuations de production. En approximation très grossière, on peut, selon la loi d'Ohm U = RI, voir que c'est ce facteur R qui peut se modifier selon les conditions d'utilisation, et donc la tension, même si l'intensité I est gardée constante ou avec un profil de variation donnée pendant la commutation.

Les avantages qu'apporte l'invention sont très significatifs. Elle permet tout d'abord de choisir le temps t de commutation quelle que soit la taille du vitrage, le calcul adéquat de l'intensité à imposer en tenant compte. Si on assemble plusieurs vitrages électrochromes de tailles différentes, en équipant une façade de bâtiment par exemple, les temps de commutation peuvent enfin être uniformes sur toute la façade, et l'on n'observe plus des temps de commutation d'autant plus longs que le vitrage est grand. Par ailleurs, l'invention permet de s'affranchir des problèmes de modifications de temps de commutation liés à la température d'utilisation. On a de plus constaté que le vitrage électrochrome pouvait présenter avec un tel système d'alimentation électrique une meilleure tenue aux cyclages à hautes températures. En s'affranchissant des problèmes de déperditions ohmiques, on a aussi observé que les colorations et décolorations du vitrage s'effectuent de manière particulièrement homogène, avec une disparition pratiquement totale du phénomène de « bord » : la modification de coloration s'effectue en même temps sur toute la surface du vitrage sans « démarrer » par la périphérie, ce qui peut être relié au fait que, par rapport à une alimentation par un générateur de tension, avec une alimentation selon l'invention, l'intensité maximale qui passe dans le circuit, à taille de vitrage et contraste identiques, a généralement des valeurs nettement plus faibles en valeur absolue.

De préférence, les intensités qui sont délivrées par le générateur d'intensité sont régulées, au moins quand le changement de coloration est une décoloration, afin de rester à des valeurs inférieures, en valeurs absolues, aux valeurs correspondant à une tension dans le circuit susceptible de conduire à la détérioration du système. En effet, en ne contrôlant que l'intensité, il se peut que dans certaines conditions d'utilisation du système, la tension se mette à augmenter suffisamment dans le circuit pour « sortir » de la zone de stabilité électrochimique du système, ce qui peut déclencher alors la formation de réactions parasites détériorant de manière irréversible le système, et ceci surtout en phase de décoloration. Il est donc prudent de tenir compte de ce risque, pour maintenir la tension dans la zone de stabilité, par des valeurs d'intensité adaptées et des moyens de mesure de tension. Pour effectuer tous ces calculs et toutes ces mesures afin de déterminer et de réguler au mieux les intensités délivrées, on peut avoir bien sûr recours à tout moyen informatique et/ou électronique. Cette régulation, de préférence, est prévue aussi bien en décoloration qu'en coloration.

Pour autant, compte tenu de ce que la valeur de la tension de dégradation peut varier dans de larges proportions selon les conditions d'utilisation du système, il est plus judicieux de baser la régulation non sur la valeur mesurée de la tension mais plutôt sur les variations de celle-ci et plus exactement sur les brusques variations de celle-ci (c'est-à-dire sur la dérivée première de la courbe U = f(t)). Une telle régulation doit toutefois tenir compte de l'intensité choisie. Tel n'est pas le cas si on opte pour une régulation basée non plus sur la dérivée première mais de préférence sur la dérivée seconde de la courbe U = f(t) ce qui revient à repérer les brusques variations de la tension qui correspondent à la mise en jeu de nouveaux équilibres électrochimiques, ou autrement dit à l'apparition de réactions parasites. De ce fait, il est tout particulièrement avantageux de baser la régulation du système sur la dérivée seconde de la courbe donnant la tension en fonction du temps.

Pour réguler l'intensité, il est ainsi possible par exemple de procéder à la mesure de la tension du circuit à l'aide d'un moyen approprié puis, notamment à intervalle de temps donné à la détermination de sa dérivée seconde par rapport au temps. Dès que cette dérivée seconde atteint une consigne donnée, on impose au générateur de diminuer l'intensité qu'il délivre. On a en effet noté qu'il était à la fois simple et efficace de se référer non pas tant aux valeurs de tension elles-mêmes mais plutôt à leur changement brusque de variation pour détecter le danger et adapter en conséquence l'alimentation du générateur. Cette manière de faire permet en outre de s'affranchir totalement des problèmes de variation de la température. Mais on peut choisir tout autre critère pour opérer la régulation.

Un autre système de régulation consiste à mesurer la tension, ou à calculer sa dérivée première par rapport au temps à partir de cette mesure. Des moyens sont alors prévus pour imposer une diminution de l'intensité délivrée par le générateur quand la tension, respectivement sa dérivée première, atteint une valeur consigne déterminée à partir des mesures de la tension, respectivement des calculs de sa dérivée, effectué(s) depuis le début du changement de coloration du système. Cela revient en fait à ne pas déterminer de manière figée, au départ, des valeurs de consigne de tension ou de sa dérivée, mais de tenir compte des valeurs obtenues lors de la diminution d'intensité précédemment réalisée pour « fixer » les seuils à ne pas dépasser (ces valeurs étant mises en mémoire par des moyens électroniques/ informatiques adhoc). On obtient ainsi une régulation exactement adaptée à l'évolution du système électrochrome quand il change de coloration, et à sa « réponse » à l'alimentation électrique qu'on lui impose, ceci en permanence, par « ajustements successifs » des valeurs de consigne à respecter.

De préférence, on choisit de couper l'alimentation quand l'intensité délivrée a atteint une valeur minimale donnée, quand le rendement a atteint 100 %, (le rendement est en fait le rapport du nombre de charges transférées pendant la commutation, par exemple la décoloration, sur le nombre de charges transférées pendant la commutation précédente inverse, dans cet exemple donc, la coloration), ou quand l'état de coloration du système a atteint une valeur donnée (il peut s'agir de la transmission lumineuse $T_L$, mesurée par une capteur de $T_L$ approprié). L'alimentation est alors coupée dès que l'une ou l'autre de ces conditions est remplie.

La connexion électrique des couches électroconductrices du système électrochrome au circuit de commande électrique est avantageusement réalisée en deux points d'amenée de courant situés chacun sur une des deux couches (par des points de soudure notamment). Chacun de ces points alimente un réseau conducteur en contact avec la couche électroconductrice sur laquelle il se trouve. Ce réseau peut prendre diverses formes : il peut s'agir de bandes d'amenées périphériques, ou véritablement d'un réseau, notamment à base d'émail conducteur déposé par sérigraphie.

On peut noter par ailleurs qu'un tel système électrochrome peut réaliser la connexion électrique de ses deux couches électroconductrices au circuit de commande électrique uniquement par des bandes conductrices d'amenée déposées sur un bord de chacune des couches de manière à être diamétralement opposées. On simplifie ainsi le mode de connexion par rapport à celui préconisé dans la demande de brevet précitée EP-A-408 427 qui utilise trois amenées, la dernière servant de référence. Et on limite d'autant les risques en cas de bris ou d'arrachage d'une des amenées.

L'invention a également pour objet un procédé d'alimentation électrique d'un système électrochrome dont la commutation entre deux états du système, notamment deux états de coloration est obtenue par passage d'un courant électrique, ladite alimentation électrique s'effectuant en générant une intensité de courant fonction du nombre de charges à transférer pour obtenir le changement de coloration voulu et en fonction du temps de changement de coloration voulu.

Ce procédé s'applique aux systèmes électrochromes fonctionnant par insertion/désinsertion de cations tels notamment ceux évoqués plus hauts mais aussi à d'autres systèmes électrochromes connus, tels notamment des systèmes dits viologènes, des systèmes comportant des composés électroactifs répartis dans une matrice placée entre deux électrodes, l'application d'un courant électrique permettant de modifier la coloration desdits composés, ou encore des systèmes fonctionnant par électrodépôt réversible.

D'autres détails et caractéristiques avantageuses de l'invention ressortent de la description détaillée ci-après faite en référence aux figures annexées qui représentent :

- **figure 1** : une représentation en coupe d'un vitrage électrochrome selon l'invention,
- **figures 2 et 3** : des représentations à 0°C de l'évolution respectivement de l'intensité et de la tension d'un vitrage alimenté par un générateur d'intensité selon l'invention et d'un vitrage comparatif par un générateur de tension pendant un cycle de coloration/décoloration,
- **figures 4 et 5** : les mêmes représentations mais à 20°C
- **figures 6 et 7 :** des représentations de l'évolution de l'intensité et de la tension à 20°C pendant un cycle de coloration/décoloration dans le cas où l'intensité est régulée en fonction des « brusques »variations de tension.

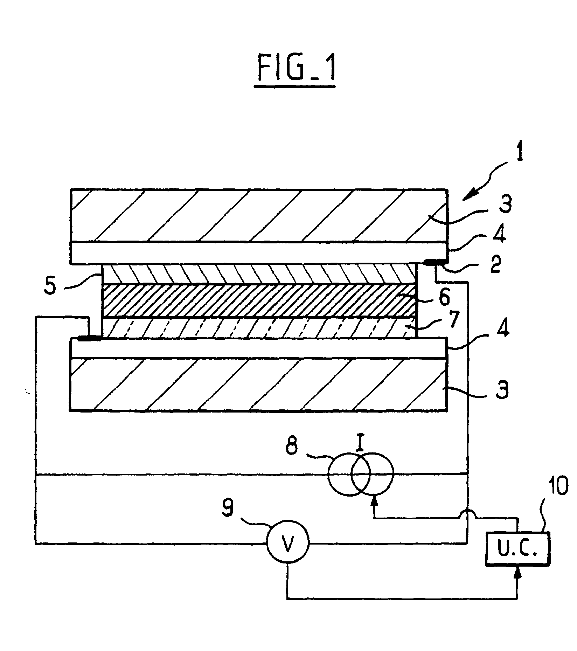

La figure 1 représente une coupe transversale du vitrage électrochrome selon l'invention.

Par souci de clarté, les rapports d'épaisseurs des différentes couches n'ont pas été respectés.

Le vitrage 1 est constitué de deux substrats de verre 3, de deux couches électroconductrices transparentes 4, d'une électrode en matériau électrochrome cathodique 5, d'une couche d'électrolyte 6 et d'une contre-électrode 7 en matériau électrochrome anodique. Deux amenées de courant 2 sont prévues pour alimenter les couches conductrices 4. Ce sont des bandes métalliques diagonalement opposées et parallèles à la longueur du vitrage.

N'a pas été représenté le joint périphérique d'étanchéité.

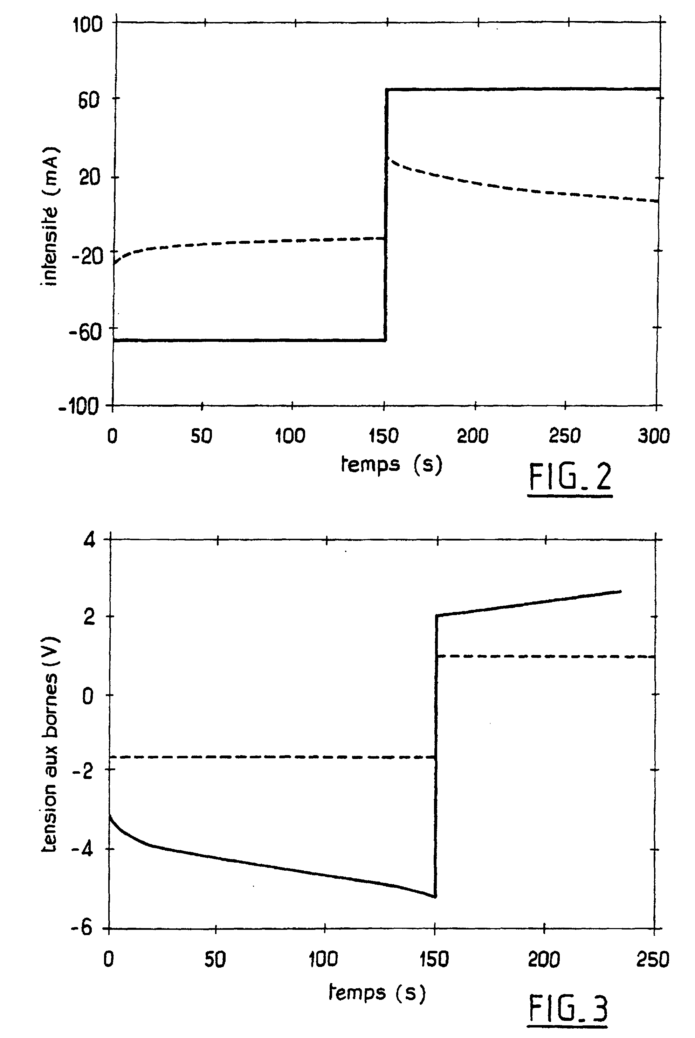

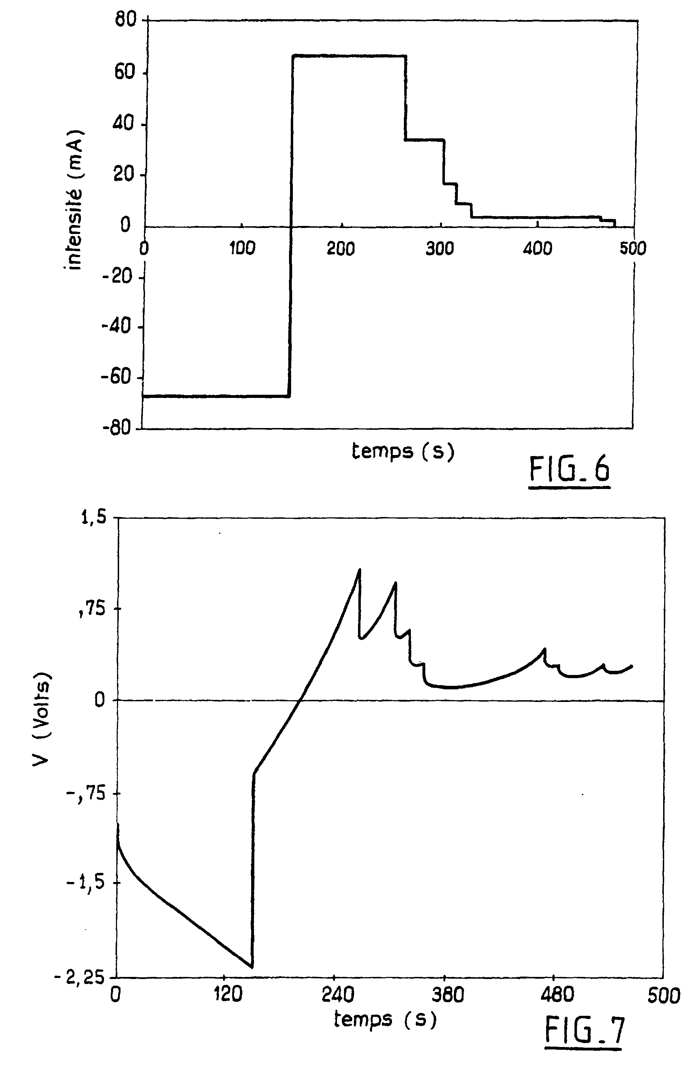

Le circuit d'alimentation électrique est représenté de manière très schématique. Il comprend un générateur d'intensité 8 et un moyen de mesure de tension 9. Le générateur 8 est piloté par une unité de contrôle 10 qui a comme fonction première de déterminer l'intensité adéquate en prenant en compte la taille du vitrage, le contraste à obtenir et le temps de commutation souhaitée. Dans la version la plus simple qui fait l'objet des figures 2 à 5, il n'y a pas de régulation de la tension. Dans la version la plus élaborée qui fait l'objet de la figure 6, il y a régulation et l'unité de contrôle exploite alors les informations données par le moyen de mesure de tension 9.

L'invention peut s'appliquer à tout type de système électrochrome fonctionnant par réactions d'insertion/désinsertion de cations H$^+$ ou Li$^+$ notamment ou plus généralement à tout système électrochrome impliquant le passage d'un courant électrique tels par exemple les systèmes dits viologènes. Une première série de tests a été préparée avec un premier type de vitrage électrochrome qui fonctionne par conduction protonique et utilise un électrolyte 6 solide conducteur de protons. Les caractéristiques des différents matériaux sont les suivantes :

- **substrat en verre 3** : feuilles de verre float de 1,5 mm d'épaisseur, de dimensions 30 x 30 cm$^2$,
- **couches électroconductrices 4 :** oxyde d'indium dopé à l'étain, déposé par pulvérisation cathodique magnétron, d'épaisseur 400 nanomètres et de résistance carrée égale à 8 ohms,
- **matériau électrochrome cathodique 5** : oxyde de tungstène WO$_3$ déposé par pulvérisation cathodique magnétron réactive à partir d'une cible en tungstène en présence d'oxygène sous une pression de 20 millitorrs (soit 2,66 Pa), d'épaisseur 300 nm,
- **matériau électrochrome anodique 7 :** oxyde d'iridium, déposé par pulvérisation cathodique assistée par champ magnétique, sous une pression de 6 millitorrs (soit 0,8 Pa) d'un mélange gazeux oxygène/hydrogène dans un rapport volumique 80/20, d'épaisseur 55 nanomètres,
- **électrolyte 6 :** solution solide d'acide phosphorique anhydre dans un polyoxyéthylène, d'épaisseur 80 micromètres, de conductivité à 20°C de 9.10$^{-6}$ ohm$^{-1}$.cm$^{-1}$ et de transmission lumineuse supérieure à 85 %. Il est préparé de la manière suivante : dans des conditions anhydres, on dissout par litre de solvant de l'acide phosphorique anhydre (21,5g) et du polyoxyéthylène de masse moléculaire 5 000 000 (densité 1,21) ; température de transition vitreuse -40°C ; rapport O/H du nombre d'atomes d'oxygène du polymère sur le nombre d'atomes d'hydrogène de l'acide égal à 0,66. Le solvant est un mélange 60/40 en volume d'acétonitrile et de tétrahydrofurane.

La solution est coulée sous atmosphère à taux d'humidité contrôlé (inférieur ou égal à 50 ppm d'eau) par la méthode du tire-film sur le substrat recouvert de l'une ou l'autre des couches de matériau électrochrome. On évapore ensuite le solvant à température ambiante sous air sec pendant 20 heures.

Un exemple comparatif a été réalisé, avec un vitrage Ibis présentant un empilement et des matériaux identiques en tout point à l'exemple selon l'invention. Seule change l'alimentation électrique, qui est cette fois conçue selon la demande de brevet EP-A-408 427, à laquelle on se rapportera pour plus de détails. Est utilisé à la place du générateur d'intensité 8 un générateur de tension et les couches conductrices sont pourvues d'une troisième amenée de courant dite point de référence faisant face à l'une des deux premières, avec un montage du type potentiostat : pour faire commuter le vitrage, on impose entre les deux amenées de courant 2 diamétralement opposées une tension U, à l'aide du générateur de tension, tension dont on module la valeur en fonction de la valeur de potentiel U$_2$ dit de consigne mesuré entre l'une des amenées et la troisième amenée qui lui fait face et qui soit de référence. L'adaptation de U$_1$ en fonction de U$_2$ permet normalement de conserver le système dans son domaine de stabilité électrochimique.

Une première série d'expérience a été réalisée avec les deux vitrages. L'objectif est de faire cycler ceux-ci, c'est-à-dire de les faire passer de l'état décoloré à l'état coloré puis de nouveau à l'état décoloré, en imposant un contraste C égal à 5 entre état décoloré et état coloré, et à trois températures différentes : à 0, 20 et 80°C.

Avec le vitrage alimenté 1 selon l'invention, est imposée en phase coloration une intensité de -28 mA et en phase de décoloration une intensité de +28 mA, intensité préalablement calculée par l'unité de contrôle pour obtenir le transfert de cations suffisant pour le contraste voulu et en fonction de la taille du vitrage, unité de contrôle à qui l'on a fixé le temps de commutation voulu, ici de 6 minutes.

Avec le vitrage selon l'exemple comparatif, est imposée en phase de coloration par le générateur de tension une tension U$_1$ telle que le potentiel de consigne U$_2$ se maintienne à une valeur de -1,6 volt. En phase de décoloration, U$_1$ est imposée par le générateur afin de maintenir la tension U$_2$ de consigne à une valeur de +1,0 volt.

| TEMPERATURE | TEMPS DE REPONSE (ex. 1) | TEMPS DE REPONSE (ex. 1bis) |
|---|---|---|
| 0°C | 6 | 47 |
| 20°C | 6 | 3 |
| 80°C | 6 | (1) |

De ce tableau, on peut voir que l'invention permet de réduire considérablement les temps de réponse des vitrages à basses températures : les 47 minutes à 0°C pour l'exemple comparatif 1 bis sont rédhibitoires alors que l'exemple 1 de l'invention permet d'obtenir, à cette même température, un temps de commutation de 6 minutes tout à fait acceptable.

Par ailleurs, l'alimentation selon l'invention permet de fixer une consigne de temps de commutation parfaitement indépendante de la température d'utilisation, ce qui est loin d'être le cas pour l'exemple 1 bis qui où il y a un facteur de quasiment 50 entre le temps de commutation à 0 et à 80°C.

En dernier lieu, la valeur de 1 minute a été mise entre parenthèse pour le temps de coloration de l'exemple 1 bis à 80°C, pour indiquer qu'à la suite d'une dizaine de commutations le vitrage était fortement détérioré (faute d'une diminution de la tension de consigne) ce qui, dans une large mesure, ne l'est pas pour l'exemple 1 selon l'invention.

Une seconde série d'expériences est illustrée à l'aide des figures 2 et 3. Ici on a choisi un temps de commutation de 150 secondes, (ce qui correspond à la durée d'une commutation, avec un montage potentiostatique, à 20°C, pour un contraste égal à 5) pour les deux vitrages, à 0°C, et en cherchant toujours à maintenir un contraste C = 5.

Le graphique de la figure 2 représente en abscisse le temps (en secondes) et en ordonnée l'intensité électrique (en mA). La courbe en trait plein est celle relative à l'exemple 1, celle en traits pointillés à l'exemple 1 bis. Les 150 premières secondes correspondent à la coloration des vitrages, les 150 suivantes à leur décoloration.

Le graphique de la figure 3 est similaire au précédent, mais ici l'ordonnée correspond non plus à l'intensité mais à la tension électrique (en volt). Pour l'exemple 1 bis, il s'agit de la tension $U_1$ générée par le générateur et prenant en compte la tension $U_2$ de consigne.

Le vitrage selon l'exemple 1 parvient sans difficulté à présenter un contraste égal 5. Par contre, le vitrage selon l'exemple 1 bis s'avère incapable de présenter un contraste supérieur à 1,5, ce qui se voit assez bien sur le graphique de la figure 2 où la courbe d'intensité de l'exemple 1 bis indique des valeurs bien plus faibles, en valeur absolue, que la courbe d'intensité de l'exemple 1 : le transfert de charges donc de cations dans le vitrage de l'exemple 1 bis a été très incomplet, aussi bien en coloration qu'en décoloration.

On confirme ainsi les avantages de l'invention déjà mis en évidence par la première série d'expériences : l'alimentation électrique selon l'invention permet de garder au vitrage ses performances à basse température, ce qui permet d'envisager de l'utiliser dans des façades de bâtiment sans avoir à prévoir des moyens pour le protéger du froid, voire de le chauffer. Par ailleurs, cette alimentation laisse libre dans une certaine mesure, l'utilisateur du choix du temps de commutation. Ainsi le contraste de 5 peut être obtenu selon l'invention à 0°C aussi bien en 6 minutes qu'en deux minutes 30, mais bien sûr les intensités à générer doivent être augmentées dans les mêmes proportions.

On peut noter cependant qu'avec un temps de commutation raccourci à deux minutes 30, on reste à des « consommations » inférieures à ± 100 mA, dont très raisonnables.

On a fait une troisième série d'expériences, dans les mêmes conditions que la seconde, sauf en ce qui concerne la température d'utilisation qui est maintenant de 20°C.

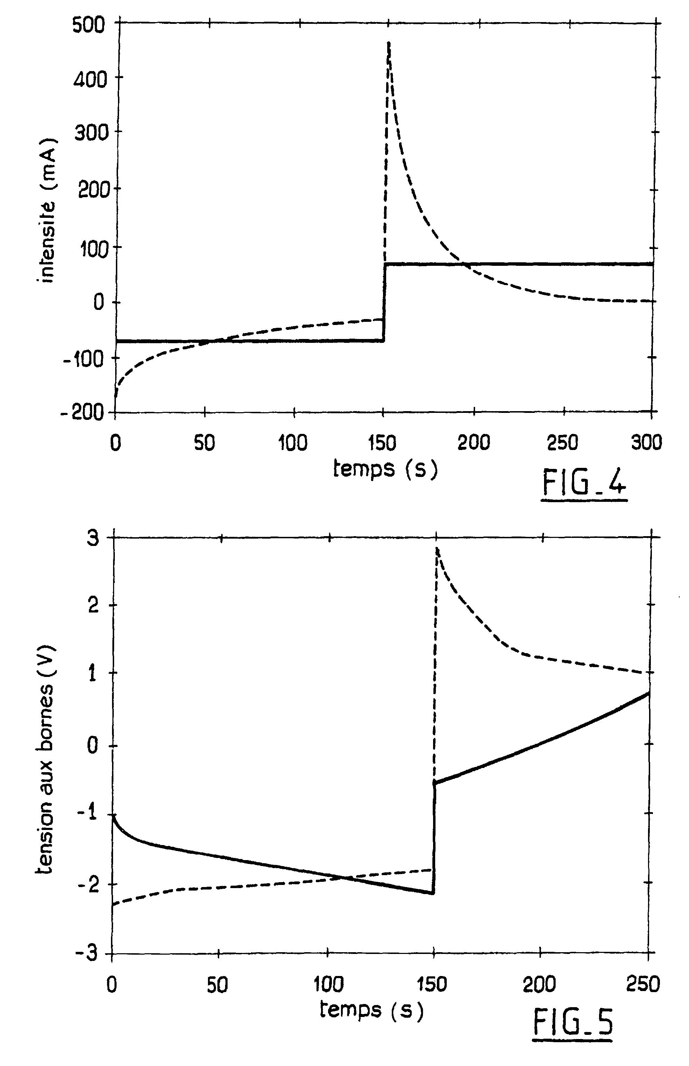

Les graphiques des figures 4 et 5 décrivent respectivement les variations d'intensité et de tension des deux vitrages en fonction du temps, comme précédemment les graphiques des figures 2 et 3. Cette fois-ci, les deux vitrages parviennent à atteindre des contrastes de 5 en 150 secondes, cependant on voit, sur ces deux graphiques, les différences très importantes entre les deux types d'alimentation. Ainsi, si l'on se rapporte à la figure 4, on voit qu'avec le montage selon l'invention on génère la même intensité de ± 66,6 mA que précédemment pour la température de 0°C. L'invention permet de ne plus avoir à modifier systématiquement le mode d'alimentation du vitrage en fonction de sa gamme présumée de températures d'utilisation.

Toujours selon le graphique de la figure 4, si l'on étudie maintenant la courbe d'intensité de l'exemple 1 bis comparatif, en pointillés, on voit qu'elle présente des pics, l'un en début de coloration et l'autre, plus important, en début de décoloration. Ainsi en début de décoloration l'intensité a un pic à environ 480 mA, à comparer aux 66,6 mA de la courbe de l'exemple 1 selon l'invention. De telles brusques et fortes variations d'intensité sont reliées au phénomène d'effet de bords.

Si l'on se reporte maintenant au graphique de la figure 5, on remarque aussi des différences notables entre les courbes des deux exemples.

Il est en outre à souligner que dans les trois séries d'expériences précédentes, le vitrage selon l'exemple comparatif 1 présente un phénomène « de bord» marqué : le changement de coloration démarre à la périphérie pour gagner progressivement la partie centrale du vitrage, il n'y a pas de changement de coloration homogène sur tout le vitrage. Au contraire, le vitrage selon l'exemple 1 ne présente quasiment pas ce phénomène: c'est un atout significatif sur le plan esthétique.

La dernière expérience réalisée à 20°C en choisissant un temps de commutation de 150 secondes soumet le vitrage selon l'exemple 1 à une alimentation en intensité par le générateur 8 pilotée par l'unité de contrôle 10, qui la régule également en fonction de la tension mesurée par le moyen de mesure 9 afin de garantir la stabilité électrochimique du vitrage. Ici la régulation n'est opérée qu'en phase de décoloration, qui est en fait la plus critique car c'est expérimentalement, celle où il peut y avoir des tensions suffisamment élevées pour risquer de générer des réactions parasites dégradantes.

La régulation en phase de décoloration est réalisée, schématiquement, de la manière suivante : l'intensité appliquée par le générateur est celle déterminée par l'unité 10, comme précédemment, pour transférer le nombre de cations voulus en un temps donné. Puis, pendant toute la décoloration, le moyen de mesure 9 « informe » l'unité de contrôle 10 de la tension aux bornes du vitrage, à intervalle de temps donné (quasiment en continu). L'unité de contrôle calcule alors pour chaque mesure de tension fournie sa dérivée seconde par rapport au temps. Dès que celle-ci atteint une valeur consigne, ici fixée à 0,5 mV.s$^{-2}$, l'unité de contrôle 10 impose au générateur d'intensité 8 de diminuer par un facteur 2 la valeur d'intensité qu'il délivre. L'unité de contrôle coupe enfin complètement l'alimentation, soit quand la valeur d'intensité atteint une valeur consigne très faible, proche de zéro, soit quand le rendement a atteint une valeur de consigne 100 %. Dans cet exemple l'alimentation est coupée pour une intensité inférieure à 0,3 mA ce qui correspond à un rendement de 99,8 %.

Le graphique de la figure 6 montre bien cette régulation par diminution par paliers de l'intensité. On y lit en abscisse le temps en seconde et en ordonnée l'intensité en mA. Le graphique de la figure 7 représente toujours le temps en seconde en abscisse et la tension en volt en ordonnée. On y retrouve également les étapes successives de la régulation, qui font chuter rapidement la tension dès qu'elle augmente brusquement.

On pourrait objecter qu'une telle régulation semble entraîner des temps de commutation en phase de décoloration un peu supérieurs aux temps de commutation choisis pour la phase de coloration. En fait, l'essentiel de la décoloration s'effectue bien dans les 150 premières secondes, tout comme la coloration, même si elle ne s'achève véritablement qu'un peu plus tard. Cependant, l'assurance d'éviter ainsi toute détérioration des vitrages compense très largement l'inconvénient que peut présenter un éventuel léger allongement du temps de commutation en décoloration. Il ne s'agit de toute façon que d'un exemple de régulation non limitatif de l'invention, et d'autres types de régulation peuvent être choisis, si cela est nécessaire, pour optimiser ce facteur temps. Un mode simple consiste par exemple à augmenter la valeur de l'intensité imposée en décoloration. Il est aussi possible de réguler également l'intensité en phase de coloration. Tout est alors affaire de compromis entre les marges de sécurité que l'on souhaite garantir, la plus ou moins grande stabilité des matériaux que l'on choisit pour fabriquer le vitrage, l'importance plus ou moins grande de la rapidité de la commutation, etc...

Comme indiqué précédemment l'invention est nullement limitée à des systèmes protoniques. Pour le montrer, des essais comparatifs entre une alimentation potentiostatique et une alimentation intensiostatique selon l'invention ont été réalisés avec un second type de vitrage électrochrome qui pour sa part, fonctionne par insertion d'ions lithium.

Les caractéristiques des matériaux utilisés pour ce système au lithium sont les suivants :

- **substrat en verre 3** : feuilles de verre float de 1,5 mm d'épaisseur, de dimensions 10 x 15 cm$^2$,
- **couches électroconductrices 4** : oxyde d'indium dopé à l'étain, déposé par pulvérisation cathodique magnétron, d'épaisseur 400 nanomètres et de résistance carrée égale à 8 ohms,
- **matériau électrochrome cathodique 5** : oxyde de tungstène $WO_3$ déposé par pulvérisation cathodique magnétron réactive à partir d'une cible en tungstène en présence d'oxygène sous une pression de 20 millitorrs (soit 2,66 Pa), d'épaisseur 300 nm,
- **matériau électrochrome anodique 7** : oxyde de nickel déposé par pulvérisation cathodique assistée par champ magnétique, sous une pression de 3,33 Pa d'un mélange gazeux oxygène/hydrogène dans un rapport volumique 80/20 d'épaisseur 200 nm. Cette contre-électrode est formatée électrochimiquement dans une solution carbone de propylène-sel $LiClO_4$ afin d'y préinsérer des ions lithium avant l'assemblage du système,
- **électrolyte - :** polyoxyéthylène dopé au triflate de lithium sur une épaisseur de 80 micromètres.

Comme précédemment, on a comparé les temps de commutation nécessaire pour obtenir un contraste de 5. Avec le montage intensiostatique selon l'invention, on a appliqué une intensité de 2,1 mA :

| TEMPERATURE | MONTAGE POTENTIOSTATIQUE | MONTAGE INTENSIOSTATIQUE |
|---|---|---|
| 0°C | 20 min | 5 min |
| 20°C | 5 min | 5 min |
| 80°C | 2 min | 5 min |

On constate de nouveau une réduction très importante des temps de commutation.

On a vu que le procédé selon l'invention consiste à forcer le passage d'une quantité idoine de charges, quantité qui dépend exclusivement de la nature des couches de matériau électrochrome et du degré de changement de coloration voulu. En particulier, cette quantité de charges est parfaitement indépendante de la résistance ionique de l'électrolyte : il est ainsi possible d'alimenter des systèmes électrochromes avec un électrolyte relativement mauvais conducteur ionique sans augmenter les temps de commutation : il importe seulement que cette conductivité ne soit pas nulle, en théorie.

En pratique, il est également souhaitable que la tension correspondant à l'intensité de courant imposée reste dans des limites raisonnables, ce qui sous-entend notamment des valeurs compatibles avec la sécurité, le type de réseau électrique disponible. Il faut également tenir compte de l'échauffement du système dû à l'effet Joule. Néanmoins, ces limites laissent encore une très grande liberté dans le choix proposé, les tensions appliquées effectivement pouvant varier par exemple entre 1 et 100 volts.

Dans la mesure où la conductivité ionique du polymère devient un paramètre moins critique, de nouveaux polymères conducteurs ioniques peuvent éventuellement être utilisés, dont la conductivité ionique est par exemple inférieure à $10^{-6}$ Ohm$^{-1}$.cm$^{-1}$à 20°C, la sélection se portant notamment sur les polymères présentant les meilleures propriétés mécaniques. Ceci revient également à abaisser la température minimale d'utilisation du système électrochrome.

Une autre voie très intéressante est offerte par la possibilité d'augmenter l'épaisseur de l'électrolyte ceci constitue un double avantage : d'une part, cela permet de compenser d'éventuels défauts de planéité des vitrages, défauts usuellement observés notamment avec des vitrages en verre trempé thermiquement, d'autre part, cela revient à espacer un peu plus les couches électroconductrices ce qui simplifie le problème de l'isolation électrique entre lesdites couches. Cette possibilité d'augmentation de l'épaisseur de l'électrolyte est plus particulièrement avantageuse pour les systèmes « tout-solide » qui utilisent à titre d'électrolyte une couche minérale et pour lesquels se posent de graves problèmes de courts circuits.

Soulignons également que cette quantité de charges ne dépend pas des couches électroconductrices transparentes : des couches dont 1a résistance carrée est supérieure à 15 Ohms par exemple d'une résistance carrée de l'ordre de 20-25 Ohms peuvent ainsi être utilisées tout en conservant des temps de commutation satisfaisants, simplement le phénomène d'effet de bord sera d'autant plus sensible que la résistivité des couches conductrices est grande.

Ainsi, on a réalisé un vitrage électrochrome de 40 x 80 cm$^2$, dont les couches électroniquement conductrices 4 ont une résistance carrée de 17 Ohms. Pour un montage potentiostatique, avec une distance de 80 cm entre les bandes d'amenée de courant, on obtient, au centre, un contraste de 3 après 10 minutes. Pour le même vitrage et la même durée de coloration, avec un montage intensiostatique selon l'invention et une intensité de 66,5 mA, le contraste au centre est égal à 5.

Dernier avantage et non des moindres, cette quantité de charges est relativement indépendante de l'état de vieillissement du système et des fluctuations de productions (ceci reste vrai tant que la quantité de charges imposée reste inférieure ou égale à la capacité d'insertion du matériau) : ce point permet d'assurer des niveaux de performance constants - en terme de vitesse de commutation - même en présence de vitrages d'ages différents (remplacement d'une des fenêtres d'une façade par exemple).

On peut également noter que l'alimentation intensiostatique conduit dans l'ensemble à des consommations électriques moindres, pour une intensité donnée, la tension appliquée est plus faible (en valeur absolue), la puissance est donc plus petite.

Enfin, dans l'exemple exposé précédemment, il n'y a qu'un seul vitrage électrochrome alimenté par un circuit électrique. Il va de soi, cependant, que l'on peut appliquer avantageusement le système d'alimentation électrique selon l'invention à une pluralité de vitrages électrochromes, montés en série ou en parallèle dans un même circuit. Dans le cas d'un montage en série, la mesure de tension se fait alors de préférence aux bornes d'au moins un des vitrages, ou de chacun des vitrages.

## Revendications

**1.** Procédé d'alimentation électrique d'un système électrochrome (1) comportant un matériau dont l'état de coloration et/ou la transmission dans certaines longueurs d'onde de rayonnement électromagnétique varie par la mise en jeu d'une réaction électrochimique impliquant le passage d'un courant électrique, ledit courant électrique étant généré par un générateur d'intensité (8) apte à délivrer un courant dont l'intensité obéit à une valeur de consigne déterminée en fonction du nombre de charges à transférer pour commuter de l'état initial à l'état voulu et en fonction de la durée choisie pour la commutation, **caractérisé en ce qu'**on régule l'intensité générée, au moins quand le changement de coloration est une décoloration, en la maintenant inférieure, en valeur absolue, à l'intensité correspondant à une tension et/ou à une variation de tension susceptible de conduire à une dégradation du système.

**2.** Procédé selon la revendication 1, **caractérisé en ce que** la détermination de l'intensité à générer s'effectue indépendamment de la température d'utilisation du système.

**3.** Procédé selon l'une des revendications précédentes, **caractérisé en ce que** les moyens de détermination et/ou de régulation des intensités à délivrer par le générateur (8) comprennent tout moyen (10) informatique et/ou électronique.

**4.** Procédé selon l'une des revendications précédentes, *caractérisé en ce qu'on* régule l'intensité en mesurant la tension dans le circuit, en déterminant, à intervalle de temps donné, sa dérivée seconde par rapport au temps et en imposant une diminution de l'intensité quand ladite dérivée seconde atteint une valeur consigne.

**5.** Procédé selon l'une des revendications précédentes, *caractérisé en ce qu'on* régule l'intensité en mesurant la tension dans le circuit ou en calculant, à partir de la mesure de la tension, sa dérivée première par rapport au temps, à intervalle de temps donné, et en imposant une diminution de l'intensité générée quand ladite tension ou ladite dérivée atteint une valeur consigne déterminée à partir des mesures/calculs de la tension ou de sa dérivée effectués depuis le début de changement de coloration du système.

**6.** Procédé selon l'une des revendications précédentes, *caractérisé en ce qu'on* coupe l'alimentation en intensité quand elle atteint une valeur minimale consigne, quand le rendement est de 100% ou quand l'état de coloration du système a atteint une valeur consigne.

**7.** Procédé selon l'une des revendications précédentes, *caractérisé en ce que* la connexion électrique des couches électroconductrices (3) du système électrochrome (1) au circuit de commande électrique est réalisée en deux points d'amenée du courant situés sur chacune desdites couches (3), chacun de ces points alimentant un réseau conducteur en contact avec la couche conductrice concernée.

**8.** Procédé selon la revendication 7, *caractérisé en ce que* la connexion électrique des couches électroconductrices (3) du système électrochrome (1) au circuit de commande électrique est réalisée uniquement par deux bandes conductrices d'amenée (2) déposées sur un bord de chacune des couches (3) et qui sont diamétralement opposées.

**9.** Procédé selon l'une des revendications précédentes, *caractérisé en ce qu'il* s'applique à un système électrochrome comportant deux substrats transparents (3) du type feuilles de verre, revêtus de deux couches électroconductrices transparentes (4) séparées par une électrode formée par une couche d'un matériau électrochrome (5), un électrolyte (6) et une contre-électrode (7), le générateur (8) étant relié aux deux couches électroconductrices (4).

**10.** Procédé selon la revendication 9, *caractérisé en ce que* les couches électroniquement conductrices du système électrochrome (1) ont une résistance carrée supérieure à 15 ohms.

**11.** Procédé selon la revendication 9 ou 10, *caractérisé en ce que* la conductivité ionique de l'électrolyte du système électrochrome (1) à 20°C est inférieure à $10^{-6}$ Ohm$^{-1}$.cm$^{-1}$.

**12.** Procédé selon l'une des revendications précédentes, *caractérisé en ce qu'il* s'applique à un système électrochrome « tout solide ».

**13.** Procédé selon l'une des revendications 1 à 8, *caractérisé en ce qu'il* s'applique à un système viologène.


**Patentansprüche**

**1.** Verfahren zur Stromversorgung eines elektrochromen Systems (1), das ein Material enthält, dessen Färbungsund/ oder Transmissionszustand bei bestimmten Wellenlängen der elektromagnetischen Strahlung durch den Einfluss einer elektrochemischen Reaktion variiert, an welcher das Fließen eines elektrischen Stroms beteiligt ist, der von einem Stromerzeuger (8) erzeugt wird, der in der Lage ist, einen Strom abzugeben, dessen Stärke einen Sollwert einhält, der in Abhängigkeit von der Zahl der für den Übergang vom Ausgangszustand in den beabsichtigten Zustand zu übertragenden Ladungen und dem dafür gewählten Zeitraum ermittelt wird, **dadurch gekennzeichnet, dass** die erzeugte Stromstärke, zumindest wenn die Verfärbung eine Entfärbung ist, geregelt wird, wobei ihr Absolutwert niedriger als die Stromstärke gehalten wird, die einer Spannung und/oder einer Spannungsänderung entspricht, die in der Lage wäre, einen Abbau des Systems zu verursachen.

**2.** Verfahren nach Anspruch 1, **dadurch gekennzeichnet, dass** die Ermittlung der zu erzeugenden Stromstärke unabhängig von der Betriebstemperatur des Systems erfolgt.

**3.** Verfahren nach einem der vorhergehenden Ansprüche, **dadurch gekennzeichnet, dass** die Mittel zur Ermittlung und/oder Regelung der vom Stromerzeuger (8) abzugebenden Stromstärke alle datenverarbeitenden und/oder elektronischen Mittel umfassen.

**4.** Verfahren nach einem der vorhergehenden Ansprüche, **dadurch gekennzeichnet, dass** die Stromstärke geregelt wird, indem die Spannung im Stromkreis gemessen wird, indem in einem gegebenen Zeitraum deren zweite Ableitung nach der Zeit gebildet und eine Verringerung der Stromstärke bewirkt wird, wenn diese zweite Ableitung einen Sollwert erreicht.

**5.** Verfahren nach einem der vorhergehenden Ansprüche, **dadurch gekennzeichnet, dass** die Stromstärke geregelt wird, indem die Spannung im Stromkreis gemessen oder aus dem Messwert der Spannung deren erste Ableitung nach der Zeit in einem gegebenen Zeitraum berechnet und eine Verringerung der erzeugten Stromstärke bewirkt wird, wenn diese Spannung oder diese Ableitung einen Sollwert erreicht, der aus Messungen/Berechnungen der Spannung oder deren Ableitung ermittelt worden ist, die nach Beginn der Verfärbung des Systems durchgeführt wurden.

**6.** Verfahren nach einem der vorhergehenden Ansprüche, **dadurch gekennzeichnet, dass** die Versorgung mit elektrischem Strom unterbrochen wird, wenn dieser einen kleinsten Sollwert erreicht, die Ausbeute 100 % beträgt oder der Färbungszustand des Systems einen Sollwert erreicht hat.

**7.** Verfahren nach einem der vorhergehenden Ansprüche, **dadurch gekennzeichnet, dass** die elektrische Verbindung der elektrisch leitfähigen Schichten (3) des elektrochromen Systems (1) mit dem elektrischen Steuerstromkreis durch zwei Stromanschlusspunkte realisiert wird, die sich jeweils auf einer der Schichten (3) befinden, wobei der jeweilige Punkt ein leitfähiges Netz versorgt, das sich mit der betreffenden leitfähigen Schicht in Kontakt befindet.

**8.** Verfahren nach Anspruch 7, **dadurch gekennzeichnet, dass** die elektrische Verbindung der elektrisch leitfähigen Schichten (3) des elektrochromen Systems (1) mit dem elektrischen Steuerstromkreis ausschließlich über zwei leitfähige Anschlussbänder (2) realisiert wird, die jeweils auf einem Rand der Schichten (3) aufgebracht und einander diametral entgegengesetzt sind.

**9.** Verfahren nach einem der vorhergehenden Ansprüche, **dadurch gekennzeichnet, dass** es auf ein elektrochromes System angewendet wird, das zwei transparente Substrate (3) vom Typ Glasscheiben umfasst, die mit zwei transparenten elektrisch leitfähigen Schichten (4) überzogen sind, die durch eine Elektrode, die von einer Schicht (5) aus einem elektrochromen Material gebildet wird, einen Elektrolyten (6) und eine Gegenelektrode (7) voneinander getrennt sind, wobei der Stromerzeuger (8) mit den zwei elektrisch leitfähigen Schichten (4) verbunden ist.

**10.** Verfahren nach Anspruch 9, **dadurch gekennzeichnet, dass** die elektronisch leitfähigen Schichten des elektrochromen Systems (1) einen Oberflächenwiderstand von mehr als 15 Ohm besitzen.

**11.** Verfahren nach Anspruch 9 oder 10, **dadurch gekennzeichnet, dass** die Ionenleitfähigkeit des Elektrolyten des elektrochromen Systems (1) bei 20 °C weniger als $10^{-6}$ $Ohm^{-1} \cdot cm^{-1}$ beträgt.

**12.** Verfahren nach einem der vorhergehenden Ansprüche, **dadurch gekennzeichnet, dass** es sich auf ein vollständig festes elektrochromes System anwenden läßt.

**13.** Verfahren nach einem der Ansprüche 1 bis 8, **dadurch gekennzeichnet, dass** es sich auf ein Viologensystem anwenden läßt.

## Claims

**1.** Process for supplying electric power to an electrochromic system (1) incorporating a material whose colouring and/or transmission state in certain electromagnetic radiation wavelengths varies by the putting into effect of an electrochemical reaction involving the passage of an electric current generated by an intensity generator (8) able to supply a current, whose intensity obeys a nominal value determined as a function of the number of charges to be transferred in order to switch from the initial state to the desired state and as a function of the chosen duration for the switching, **characterized in that** the generated intensity is regulated, at least when the colouring change is a discoloration, by keeping it below, in absolute values, the intensity corresponding to a voltage and/or to a voltage variation liable to bring about a deterioration of the system.

2.  Process according to claim 1, **characterized in that** the termination of the intensity to be generated takes place independently of the temperature of use of the system.

3.  Process according to one of the preceding claims, **characterized in that** the means for determining and/or regulating intensities to be delivered by the generator (8) comprise any information technology and/or electronic means (10).

4.  Process according to one of the preceding claims, **characterized in that** the intensity is regulated by measuring the voltage in the circuit, whilst determining at a given temperature interval its second time derivative and by imposing an intensity decrease when said second derivative reaches a nominal value.

5.  Process according to one of the preceding claims, **characterized in that** the intensity is regulated by measuring the voltage in the circuit or by calculating, on the basis of the voltage measurement, its first time derivative, at a given time interval, and by imposing a decrease in the generated intensity when said voltage or said derivative reaches a nominal value determined on the basis of measurements/calculations of the voltage or its derivative performed as from the start of the system colouring change.

6.  Process according to one of the preceding claims, **characterized in that** the intensity supply is disconnected when it reaches a minimum nominal value, when the efficiency is 100% or when the colouring state of the system has reached a nominal value.

7.  Process according to one of the preceding claims, **characterized in that** the electrical connection of the electrically conductive layers (3) of the electrochromic system (1) to the electrical control circuit takes place at two current feed points located on each of said layers (3), each of said points supplying a conductor system in contact with the conductive layer in question.

8.  Process according to claim 7, **characterized in that** the electrical connection of the electrically conductive layers (3) of the electrochromic system (1) to the electrical control circuit takes place solely through two conductive feed strips (2) deposited on one edge of each of the layers (3) and which are diametrically opposite to one another.

9.  Process according to one of the preceding claims, **characterized in that** it is applicable to an electrochromic system incorporating two transparent substrates (3) of the glass sheet type, covered by two transparent, electrically conductive layers (4) separated by an electrode formed by an electrochromic material layer (5), an electrolyte (6) and a counterelectrode (7), the generator (8) being connected to the two electrically conductive layers (4).

10. Process according to claim 9, **characterized in that** the electrically conductive layers of the electrochromic system (1) have a square resistance above 15 ohms.

11. Process according to claim 9 or 10, **characterized in that** the ionic conductivity of the electrolyte of the electrochromic system (1) at $20°C$ is below $10^{-6}$ ohm$^{-1}$.cm$^{-1}$.

12. Process according to one of the preceding claims, **characterized in that** it applies to an "all solid" electrochromic system.

13. Process according to one of the claims 1 to 8, **characterized in that** it applies to a viologenic system.

## FIG_1

FIG. 2

FIG. 3

FIG_4

FIG_5

FIG. 6

FIG. 7